# EUROPÄISCHE PATENTANMELDUNG

(11) **EP 2 821 157 A1**
(43) Veröffentlichungstag der Anmeldung: **07.01.2015**
(21) Anmeldenummer: 13175025.9
(22) Anmeldetag: 04.07.2013
(51) Int. Cl.: B21D 15/06, B21C 37/20, F16F 15/00

(54) **Vorrichtung und Verfahren zum Einprägen einer Wellung in ein Rohr**

(71) Anmelder: Nexans, 75008 Paris (FR)
(72) Erfinder: Zummach, Volker, 31061 Alfeld (DE); Krause, Thomas, 31542 Bad Nenndorf (DE); Schmidt, Anatoli, 30539 Hannover (DE); Harms, Adrian, 30627 Hannover (DE)
(74) Vertreter: Feray, Valérie

(57) **Zusammenfassung**

Es wird eine Vorrichtung (5) zum Einprägen einer Wellung in ein metallisches glattes Rohr (1) angegeben. Die Vorrichtung umfaßt eine Welleinrichtung (9), durch welche das Rohr (1) in seiner Längsrichtung hindurch bewegt wird und welche die Wellung in Umfangsrichtung des Rohres (1) durch Rotation erzeugt, wobei die Welleinrichtung (9) einen um seine Achse drehbaren Wellerkopf (11) und eine Hohlwelle (17) hat, an der der Wellerkopf (11) fest angebracht ist und über welche der Wellerkopf (11) drehantreibbar ist. An der Vorrichtung ist weiterhin ein Schwingungsmeßmittel (21) angebracht, welches mechanisch mit der Welleinrichtung (9) verbunden und geeignet ist, mechanische Schwingungen der rotierenden Welleinrichtung (9) automatisch zu erfassen. Es ist weiterhin eine mit dem Schwingungsmeßmittel (21) gekoppelte Anzeigevorrichtung zur Anzeige der von demselben erfaßten Meßwerte und/oder auf den Meßwerten basierenden Auswerteergebnissen vorhanden.

## Beschreibung

Die Erfindung bezieht sich auf eine Vorrichtung zum Einprägen einer Wellung in ein metallisches glattes Rohr, welche eine drehantreibbare Welleinrichtung aufweist, durch welche das Rohr in seiner Längsrichtung hindurch bewegt wird und welche die Wellung in Umfangsrichtung des Rohres durch Rotation erzeugt, wobei die Welleinrichtung einen um seine Achse drehbaren Wellerkopf und eine Hohlwelle hat, an der der Wellerkopf fest angebracht und über welche der Wellerkopf drehantreibbar ist, sowie auf ein Verfahren zur Erzeugung der Wellung.

Eine Vorrichtung zur Herstellung gewellter Rohre ist z. B. in EP 1 084 774 B1 beschrieben. Sie wird zur Herstellung von, dank ihrer Wellung, flexiblen Rohren aus Metall eingesetzt. Die gewellten Metallrohre finden beispielsweise Anwendung in der Kabelindustrie als elektrische Leiter von Hochfrequenzkabeln oder als Umhüllung von elektrischen und optischen Kabeln, oder sie werden für den Transport von Gasen oder Flüssigkeiten eingesetzt.

Bei der erwähnten bekannten Vorrichtung nach der EP 1 084 774 B1 wird ein Rohr aus einem längseinlaufenden Metallband geformt, welches an einem Längsschlitz verschweißt wird. Das erhaltene glatte Rohr wird dann in einer Welleinrichtung, welche das Rohr in seiner Längsrichtung durchläuft, quer zu seiner Längsrichtung gewellt. Die Welleinrichtung besteht aus einem Wellerkopf, in welchem eine Wellerscheibe drehbar gelagert ist, die bei Betrieb der Welleinrichtung die Wellung in das Rohr prägt. Der Wellerkopf wird von einer Hohlwelle, an der der Wellerkopf fest angebracht ist, mittels eines Elektromotors in Drehbewegung versetzt. Für die Qualität der Wellung und eine gleichbleibend leistungsfähige Welleinrichtung ist ein gleichmäßig und konzentrisch rotierender Wellerkopf ausschlaggebend.

Die Rotation des Wellerkopfs, und damit der Wellscheibe, wird insbesondere von der Qualität der Auswuchtung des Wellerkopfs und von dem Zustand der Lager der Hohlwelle beeinflußt. Beim Einrichten des Wellerkopfs wird die Position der radial verschiebbar gelagerten Wellerscheibe so gewählt, daß die Welltiefe des zu produzierenden gewellten Rohres dem gewünschten Wert entspricht. Die radiale Verschiebung der Wellerscheibe samt seiner Aufnahme macht das Auswuchten des Wellerkopfs mit Gegengewichten erforderlich. Ein schlecht ausgewuchteter Wellerkopf läßt sich beispielsweise vom Maschinenführer der Vorrichtung an mehr oder weniger stark ausgeprägten mechanischen Schwingungen desselben erkennen. Diese Schwingungen können zu erheblichen Schäden an den Hohlwellenlagern oder an Lagern des Wellerkopfs führen. Ebenso tragen verschlissene Hohlwellenlager zu einer Verschlechterung der Drehbewegung der Hohlwelle und damit des Wellerkopfs bei, was sich durch eine Verschlechterung der Qualität am flexiblen Rohr aus Metall bemerkbar machen kann.

Der Erfindung liegt die Aufgabe zugrunde, die Vorrichtung bzw. das Verfahren zum Einprägen der Wellung in ein Rohr so zu verbessern, daß eine gleichbleibend gleichmäßige Rotation, ohne dieselbe beeinträchtigende mechanische Schwingung der Welleinrichtung, gewährleistet werden kann.

Diese Aufgabe wird gemäß der Erfindung dadurch gelöst,
- daß an der Vorrichtung weiterhin ein Schwingungsmeßmittel angebracht ist, welches mechanisch mit der Welleinrichtung verbunden und geeignet ist, mechanische Schwingungen der rotierenden Welleinrichtung automatisch zu erfassen, und
- daß eine mit dem Schwingungsmeßmittel gekoppelte Anzeigevorrichtung zur Anzeige der von demselben erfaßten Meßwerte und/oder auf den Meßwerten basierenden Auswerteergebnissen vorhanden ist.

Die Auswertung der erfaßten Meßwerte erfolgt durch eine geeignete Auswerte- oder Überwachungseinheit, die mit dem Schwingungssensor gekoppelt ist.

Die Meßsignale können auch zur weiteren Verwendung mittels einer Datenverarbeitungsanlage weiterverarbeitet werden.

Durch den Schwingungsmesser und die mit diesem gekoppelte Anzeigevorrichtung wird der Maschinenführer der Vorrichtung automatisch darauf hingewiesen, wenn störende Schwingungen die Rotation des Wellerkopfs beeinträchtigen. Es lassen sich beispielsweise aus einem Frequenzspektrum von Meßwerten, die der Schwingungsmesser liefert, Rückschlüsse auf die Natur und den Ursprung der unerwünschten Schwingungen ziehen. Beispielsweise lassen sich durch die Unwucht des Wellerkopfs verursachte Schwingungen problemlos von durch verschlissene Hohlwellenlager verursachte Schwingungen unterscheiden. Dadurch ist es dem Maschinenführer möglich, zu starken Schwingungen gezielt entgegenzuwirken, indem er z. B. die Ausgleichsgewichte am Wellerkopf nachstellt, um eine Unwucht zu beseitigen. Da sich der Verschleiß der Hohlwellenlager durch eine Schwingungsanalyse anhand seiner Schwingungscharakteristik frühzeitig erkennen läßt, kann der Maschinenführer außerdem die Hohlwellenlager zweckmäßig dann durch neue ersetzen, wenn die Vorrichtung gerade nicht in Betrieb ist. Dadurch kann eine Unterbrechung der laufenden Fertigung vermieden werden, so daß keine unbrauchbaren Längen des gewellten Rohres anfallen. Insbesondere die Lebensdauer oder Nutzzeit der Hohlwellenlager und der Lager des Wellerkopfs läßt sich vorteilhaft optimieren bzw. verlängern, da die Lager zum einen durch die Vermeidung der Schwingungen geschont und zum anderen erst bzw. bereits dann ausgetauscht werden, wenn es nötig ist.

Ausführungsbeispiele des Erfindungsgegenstandes sind in den Zeichnungen dargestellt. Es zeigen:
Fig. 1 in schematischer Darstellung eine Anordnung zur Einprägung einer Wellung in ein glattes Rohr,
Fig. 2 eine in der Anordnung nach Fig. 1 einsetzbare Vorrichtung gemäß der Erfindung in vergrößerter Darstellung.

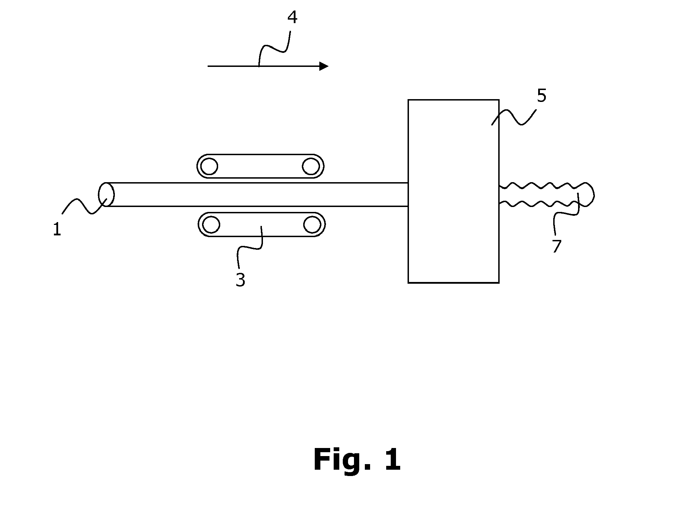

Mittels der in Fig. 1 schematisch dargestellten Anordnung wird eine Wellung in ein glattes metallisches Rohr 1 eingeprägt. Das Rohr kann gemäß einem bekannten Verfahren hergestellt werden, wie es z. B. in der eingangs erwähnten EP 1 084 774 B1 beschrieben ist. Das Rohr kann beispielsweise aus Stahl, Kupfer oder Aluminium bestehen.

Im dargestellten Ausführungsbeispiel wird das glatte Rohr 1 mittels einer Abzugsvorrichtung 3 in Pfeilrichtung 4 durch eine Vorrichtung 5 nach der Erfindung geschoben, in welcher das glatte Rohr 1 mit einer ringförmig oder spiralförmig ausgeführten Wellung versehen wird. Das gewellte Rohr 7 kann dann auf eine nicht dargestellte Spule aufgewickelt werden.

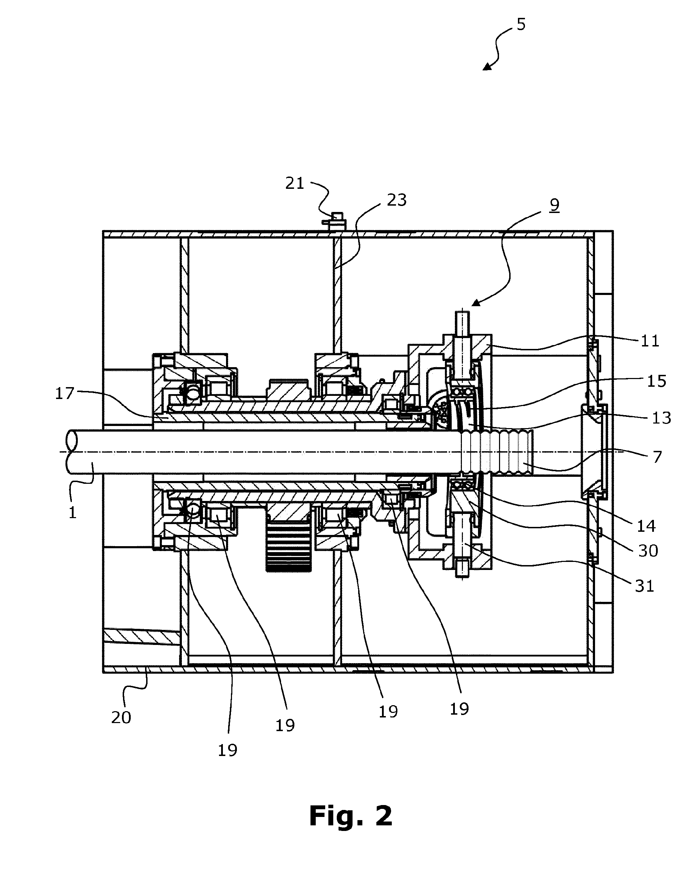

In Fig. 2 ist die Vorrichtung 5 gemäß der Erfindung genauer dargestellt. Sie umfaßt eine grundsätzlich bekannte Welleinrichtung 9. Die Welleinrichtung 9 besteht aus einem Wellerkopf 11 und einer Wellerscheibe 13. Der Wellerkopf 11 ist als Ringscheibe ausgeführt, in dessen zentraler Öffnung die Wellerscheibe 13 um ihre Achse drehbar gelagert ist. Die Wellerscheibe 13 kann z. B. auf Kugellagern 14, die sich in einem Lagergehäuse 30 befinden, im Wellerkopf 11 gelagert sein. Im dargestellten Ausführungsbeispiel weist die Wellerscheibe 13 eine nach innen weisende, spiralförmig geformte Verformungsrippe 15 auf, mittels welcher eine ringförmige Wellung in das Rohr 1 eingeprägt wird, während die Wellerscheibe 13 um das Rohr rotiert. Wenn die Wellung spiralförmig sein soll, ist die Verformungsrippe ringförmig ausgeführt.

Die Wellerscheibe 13 ist samt Lagerung 14 und Lagergehäuse 30 über eine Verschiebeachse 31 radial verschiebbar. Durch das exzentrische Positionieren der Wellerscheibe über die Verschiebemöglichkeit läßt sich die Welltiefe des zu wellenden Rohres beeinflussen. Diese Exzentrizität wird durch Ausgleichsgewichte (nicht dargestellt), die am Wellerkopf 11 befestigt werden, ausgeglichen und die Unwucht des Wellerkopfs 11 damit reduziert.

Der Wellerkopf 11 ist an eine Hohlwelle 17 angeflanscht, welche beispielsweise von einem Elektromotor angetrieben wird, durch welchen der Wellerkopf 11 in Rotation versetzt werden kann. Die Hohlwelle 17 ist mittels Hohlwellenlagern 19 drehbar in einem feststehenden Gehäuse 20 gelagert.

Beim Betrieb der Vorrichtung 5 werden der Wellerkopf 11 und die von diesem mitgenommene Wellerscheibe 13 in Umfangsrichtung um das glatte Rohr 1 gedreht, wobei die Verformungsrippe 15 die Wellung in das Rohr 1 drückt. Das Rohr 1 wird dabei gleichzeitig in Pfeilrichtung 4 durch die Welleinrichtung 9 geschoben.

Gemäß der Erfindung umfaßt die Vorrichtung 5 weiterhin einen Schwingungsmesser 21, beispielsweise einen Beschleunigungsmesser. Der Schwingungsmesser 21 erfaßt Schwingungen der Welleinrichtung 5 im Betrieb derselben. Die gemessenen Schwingungen sind insbesondere charakteristisch für die Unwucht des Wellerkopfs 11 und für den Zustand der Hohlwellenlager 19.

Im gezeigten Ausführungsbeispiel ist der Schwingungsmesser 21 außen am Gehäuse 20 der Vorrichtung 5 in unmittelbarer Nähe einer Verbindungsrippe 23, d.h., in Richtung der Achse derselben, angebracht, welche die Hohlwellenlager 19 mit dem Gehäuse 20 verbindet. Durch diese direkte mechanische Verbindung des Schwingungsmessers 21 mit dem Wellerkopf 11 und mit der Hohlwelle 17 können die Schwingungen gut und ohne zu große Dämpfungsverluste vom Schwingungsmesser 21 erfaßt werden.

Die von dem Schwingungsmesser 21 erfaßten Schwingungsmeßwerte können, z. B. über eine nicht näher erläuterte Auswerte- oder Überwachungseinheit, ausgewertet werden. Dadurch läßt sich überwachen, ob die Welleinrichtung betriebsfähig ist. Über die Auswerteergebnisse oder Ausgangswerte erhält der Maschinenführer beispielweise darüber Auskunft, ob der Wellerkopf ausreichend ausgewuchtet ist und/oder ob die Hohlwellenlager verschlissen sind.

Die Vorrichtung 5 umfaßt erfindungsgemäß weiterhin eine mit dem Schwingungsmeßmittel 21 gekoppelte Anzeigevorrichtung (nicht dargestellt) zur Anzeige der von demselben erfaßten Meßwerte. Die Anzeigevorrichtung kann die direkt gemessenen Meßwerte oder die bereits ausgewerteten Meßwerte anzeigen, beispielsweise als Frequenzspektrum.

Die Anzeigevorrichtung kann beispielsweise auch eine Ampelfunktion in Form von farbigen Leuchten beinhalten. Bei grünem Licht wird dem Maschinenführer angezeigt, daß der Wellerkopf 11 ausreichend ausgewuchtet ist. Bei gelbem Licht kann die Vorrichtung 5 weiter in Betrieb bleiben, der Wellerkopf 11 sollte aber besser ausgewuchtet werden. Bei rotem Licht muß der Wellerkopf 11 sofort neu ausgewuchtet werden.

Ebenso kann die Anzeigevorrichtung auf bekannte Weise beispielsweise den Zustand der Hohlwellenlager 19 durch optische oder akustische Signale anzeigen, wie z. B. durch eine rot blinkende Leuchte für sofort auszutauschende Hohlwellenlager 19.

Die Schwingungsmeßwerte, Auswerteergebnisse und andere Daten, wie z. B. das Datum, an welchem die Hohlwellenlager zuletzt ausgetauscht worden sind, können gespeichert, übertragen und zur weiteren Verwendung mittels einer Datenverarbeitungsanlage weiterverarbeitet werden.

## Patentansprüche

1. Vorrichtung (5) zum Einprägen einer Wellung in ein metallisches glattes Rohr (1), welche eine Welleinrichtung (9) aufweist, durch welche das Rohr (1) in seiner Längsrichtung hindurch bewegt wird und welche die Wellung in Umfangsrichtung des Rohres (1) durch Rotation erzeugt, wobei die Welleinrichtung (9) einen um seine Achse drehbaren Wellerkopf (11) und eine Hohlwelle (17) hat, an der der Wellerkopf (11) fest angebracht und über welche der Wellerkopf (11) drehantreibbar ist, **dadurch gekennzeichnet,**
- **daß** an der Vorrichtung weiterhin ein Schwingungsmeßmittel (21) angebracht ist, welches mechanisch mit der Welleinrichtung (9) verbunden und geeignet ist, mechanische Schwingungen der rotierenden Welleinrichtung (9) automatisch zu erfassen, und
- **daß** eine mit dem Schwingungsmeßmittel (21) gekoppelte Anzeigevorrichtung zur Anzeige der von demselben erfaßten Meßwerte und/oder auf den Meßwerten basierenden Auswerteergebnissen vorhanden ist.

2. Vorrichtung nach Anspruch 1, **dadurch gekennzeichnet, daß** das Schwingungsmeßmittel (21) geeignet ist, simultan Meßwerte für Schwingungen der Hohlwelle (17), die charakteristisch für den Zustand von Hohlwellenlagern (19), auf denen die Hohlwelle (17) drehbar gelagert ist, sind, und Meßwerte für Schwingungen des Wellerkopfs (11), die charakteristisch für die Auswuchtung desselben sind, zu erfassen.

3. Vorrichtung nach Anspruch 1 oder 2, **dadurch gekennzeichnet, daß** das Schwingungsmeßmittel (21) mittels einer direkten mechanischen Verbindung zu dem Wellerkopf (11) und zu der Hohlwelle (17) an der Welleinrichtung angebracht ist.

4. Vorrichtung nach Anspruch 3, **dadurch gekennzeichnet, daß** die direkte mechanische Verbindung eine Rippe (23) ist, welche die Welleinrichtung (9) in einem Gehäuse (20) hält, und wobei das Schwingungsmeßmittel (21) außen an dem Gehäuse (20) in Richtung der Achse der Rippe (23) angebracht ist.

5. Vorrichtung nach einem der vorangehenden Ansprüche, **dadurch gekennzeichnet, daß** das Schwingungsmeßmittel (21) ein Beschleunigungssensor ist.

6. Vorrichtung nach einem der vorangehenden Ansprüche, **dadurch gekennzeichnet, daß** eine Überwachungseinheit umfaßt oder angeschlossen ist, welche die auf den Schwingungsmeßwerten basierenden Auswerteergebnisse liefert und geeignet ist festzustellen, ob die Welleinrichtung betriebsfähig ist.

7. Verfahren zum Einprägen einer Wellung in ein metallisches glattes Rohr (1) mittels einer Vorrichtung (5), die eine Welleinrichtung (9) umfaßt, durch welche das Rohr (1) in seiner Längsrichtung hindurch bewegt wird und welche eine in Umfangsrichtung des Rohres (1) verlaufende Wellung desselben erzeugt, bei welchem die einem Wellerkopf (11) und eine mit demselben verbundene Hohlwelle (17) aufweisende Welleinrichtung (9) um ihre Achse gedreht wird, **dadurch gekennzeichnet,**
- **daß** an der Welleinrichtung (9) weiterhin ein Schwingungsmeßmittel (21) angebracht wird, welches mechanisch mit der Welleinrichtung (9) verbunden wird und geeignet ist, mechanische Schwingungen der rotierenden Welleinrichtung (9) automatisch zu erfassen, und
- **daß** die Vorrichtung (5) zusätzlich mit einer Anzeigevorrichtung zur Anzeige von Meßwerten, die von dem Schwingungsmeßmittel (21) geliefert werden, und/oder von auf den Meßwerten basierenden Auswerteergebnissen, ausgerüstet wird.

## Geänderte Patentansprüche

### Geänderte Patentansprüche gemäss Regel 137(2) EPÜ.

1. Vorrichtung (5) zum Einprägen einer Wellung in ein metallisches glattes Rohr (1), welche eine Welleinrichtung (9) aufweist, durch welche das Rohr (1) in seiner Längsrichtung hindurch bewegt wird und welche die Wellung in Umfangsrichtung des Rohres (1) durch Rotation erzeugt, wobei die Welleinrichtung (9) einen um seine Achse drehbaren Wellerkopf (11) und eine drehbar auf Hohlwellenlagern (19) gelagerte Hohlwelle (17) hat, an der der Wellerkopf (11) fest angebracht und über welche der Wellerkopf (11) drehantreibbar ist, **dadurch gekennzeichnet,**
- **daß** an der Vorrichtung weiterhin ein Schwingungsmeßmittel (21) angebracht ist, welches mechanisch mit der Welleinrichtung (9) verbunden und geeignet ist, mechanische Schwingungen der rotierenden Welleinrichtung (9) automatisch zu erfassen, und
- **daß** das Schwingungsmeßmittel (21) geeignet ist, simultan Meßwerte für Schwingungen der Hohlwelle (17), die charakteristisch für den Zustand der Hohlwellenlager (19) sind, und Meßwerte für Schwingungen des Wellerkopfs (11), die charakteristisch für die Auswuchtung desselben sind, zu erfassen, und
- **daß** eine mit dem Schwingungsmeßmittel (21) gekoppelte Anzeigevorrichtung zur Anzeige der von demselben erfaßten Meßwerte und/oder auf den Meßwerten basierenden Auswerteergebnissen vorhanden ist.

2. Vorrichtung nach Anspruch 1, **dadurch gekennzeichnet, daß** das Schwingungsmeßmittel (21) mittels einer direkten mechanischen Verbindung zu dem Wellerkopf (11) und zu der Hohlwelle (17) an der Welleinrichtung angebracht ist.

3. Vorrichtung nach Anspruch 2, **dadurch gekennzeichnet, daß** die direkte mechanische Verbindung eine Rippe (23) ist, welche die Welleinrichtung (9) in einem Gehäuse (20) hält, und wobei das Schwingungsmeßmittel (21) außen an dem Gehäuse (20) in Richtung der Achse der Rippe (23) angebracht ist.

4. Vorrichtung nach einem der vorangehenden Ansprüche, **dadurch gekennzeichnet, daß** das Schwingungsmeßmittel (21) ein Beschleunigungssensor ist.

5. Vorrichtung nach einem der vorangehenden Ansprüche, **dadurch gekennzeichnet, daß** eine Überwachungseinheit umfaßt oder angeschlossen ist, welche die auf den Schwingungsmeßwerten basierenden Auswerteergebnisse liefert und geeignet ist festzustellen, ob die Welleinrichtung betriebsfähig ist.

6. Verfahren zum Einprägen einer Wellung in ein metallisches glattes Rohr (1) mittels einer Vorrichtung (5), die eine Welleinrichtung (9) umfaßt, durch welche das Rohr (1) in seiner Längsrichtung hindurch bewegt wird und welche eine in Umfangsrichtung des Rohres (1) verlaufende Wellung desselben erzeugt, bei welchem die einem Wellerkopf (11) und eine mit demselben verbundene und drehbar auf Hohlwellenlagern (19) gelagerte Hohlwelle (17) aufweisende Welleinrichtung (9) um ihre Achse gedreht wird, **dadurch gekennzeichnet,**
- **daß** an der Welleinrichtung (9) weiterhin ein Schwingungsmeßmittel (21) angebracht wird, welches mechanisch mit der Welleinrichtung (9) verbunden wird und geeignet ist, mechanische Schwingungen der rotierenden Welleinrichtung (9) automatisch zu erfassen,
- **daß** mit dem Schwingungsmeßmittel (21) simultan Meßwerte für Schwingungen der Hohlwelle (17), die charakteristisch für den Zustand der Hohlwellenlager (19) und Meßwerte für Schwingungen des Wellerkopfs (11), die charakteristisch für die Auswuchtung desselben sind, erfaßt werden, und
- **daß** die Vorrichtung (5) zusätzlich mit einer Anzeigevorrichtung zur Anzeige von Meßwerten, die von dem Schwingungsmeßmittel (21) geliefert werden, und/oder von auf den Meßwerten basierenden Auswerteergebnissen, ausgerüstet wird.
